# EUROPÄISCHE PATENTSCHRIFT

(11) **EP 1 952 179 B1**
(45) Veröffentlichungstag und Bekanntmachung des Hinweises auf die Patenterteilung: **12.10.2016**
(21) Anmeldenummer: 06819097.4
(22) Anmeldetag: 18.10.2006
(51) Int. Cl.: G01S 7/497, G01S 17/10, G01S 17/93, G01S 7/483

(54) **VERFAHREN ZUR UMFELDERFASSUNG**
METHOD FOR THE DETECTION OF SURROUNDINGS
PROCEDE POUR OPERATIONS DE DETECTION DE L'ENVIRONNEMENT

(30) Priorität: 14.11.2005 DE 102005054135
(43) Veröffentlichungstag der Anmeldung: 06.08.2008
(73) Patentinhaber: ROBERT BOSCH GMBH, 70442 Stuttgart (DE)
(72) Erfinder: MERKEL, Rudolf, 76297 Stutensee (DE); ZIMMERMANN, Uwe, 71686 Remseck (DE); WEILKES, Michael, 74343 Sachsenheim (DE)
(86) Internationale Anmeldenummer: PCT/EP2006/067545
(87) Internationale Veröffentlichungsnummer: WO 2007/054422

(56) Entgegenhaltungen:
- DE-A1- 3 912 704
- GB-A- 1 253 734
- GB-A- 1 376 702
- US-A- 6 050 945
- US-A1- 2002 107 637
- US-A1- 2002 177 953

## Beschreibung

Die Erfindung betrifft eine Einrichtung zur Umfelderfassung.

### Stand der Technik

Zur Umfelderfassung wird üblicherweise ein Verfahren zu direkten Abtastung einer Rückstreukurve angewandt. Ein Nachteil dieses Verfahrens ist jedoch, dass es eine sehr schnelle Auswerteelektronik zur A/D-Wandlung und zur Erreichung hoher Datenübertragungsraten bzw. hoher Signalverarbeitungsgeschwindigkeiten erfordert.

Das ebenfalls zur Umfelderfassung benutzte sog. Boxcar-Verfahren hat den Nachteil, dass eine komplette Rückstreukurve erst nach m*n Pulsen, mit m als Anzahl von Auflösungszellen und n als Anzahl von Pulsen, über die innerhalb einer Auflösungszelle gemittelt wird, vorliegt. Bei geringen Puls-Pausen-Verhältnissen von 1:1000, z.B. bei Laserdioden, wird dadurch eine Messzeit mit ca. 30 µs pro Messpunkt oder Entfernungszelle vergrößert, so dass sich ein Auswertesystem u.U. für längere Zeit im Leerlauf befindet.

Die US 2002/177953 A1 zeigt eine Vorrichtung und ein Verfahren zur Umfelderfassung mittels einer Quelle, die gepulste Signale aussendet.

US-A-6050945 offenbart eine Ultraschallabbildungsvorrichtung, die mehrere HF-Überträger aufweist, um Sendepulse auszuführen

### Vorteile der Erfindung

Bei Verfahren zur Umfelderfassung wird mittels einer Quelle, die gepulste Signale aussendet, durchgeführt. Dabei werden von einem Objekt rückgestreute Signale von einem Sensor erfasst. Bei Durchführung des Verfahrens wird bei einer Grobabtastung eine Anwesenheit des Objekts detektiert. Zur Bestimmung einer mit dem detektierten Objekt zusammenhängenden Größe werden Betriebsparameter der Quelle auf eine Feinabtastung eingestellt werden.

Die Erfindung betrifft eine Einrichtung zur Umfelderfassung. Die Einrichtung weist eine Quelle, die gepulste Signale aussendet, und eine Schaltungsanordnung auf, wobei die Schaltungsanordnung in einem Eingangspfad auf einer Primärseite eines HF-Übertragers eine Referenzpulswicklung zur Generierung eines Referenzpulses aufweist.

Weitere vorteilhafte Ausgestaltungen ergeben sich aus den abhängigen Patentansprüchen.

Mit der Erfindung wird eine Möglichkeit zur Umfelderfassung mit einem Boxcar-Verfahren für gepulste Sensorsysteme, z.B. Lidar, bereitgestellt. Eine Variation eines Puls-Pausen-Verhältnisses, eines sog. Dutycycles, ist für Boxcar-Verfahren nicht bekannt. Das Puls-Pausen-Verhältnis, auch Tastverhältnis genannt, gibt bei einem Rechtecksignal ein Verhältnis einer Länge eines eingeschalteten Zustands und somit einer Impulsdauer zu einer Periodendauer an.

Mit der Einrichtung ist eine kostengünstige Auswertung unter Abdeckung eines großen Entfernungsbereiches von bspw. 0,1 m bis 80 m, insbesondere mittels Laserdioden oder infrarotemittierender Dioden(IRED) als benutzte Quellen, möglich. Es ist vorgesehen, herkömmliche Delaybausteine oder deren Weiterentwicklungen davon, z. B. "CC850" der Robert Bosch GmbH, mit einer einer Entfernung von 30 m entsprechenden, maximalen Verzögerung (Delay) zu verwenden. Zur Auswertung, Messdatenverarbeitung, Bandendeprüfung sowie Autokalibration kann eine um dem Delaybaustein bereits vorhandene Peripherie verwendet werden.

Die Erfindung kann bei bekannten Methoden zur Messung von Rückstreukurven zur Laufzeitbestimmung in abstandsmessenden Sensoren mittels Pulsbetrieb, Ultraschall, Lidar oder Radar eingesetzt werden. Bei der mit dem Objekt zusammenhängenden Größe kann es sich um einen relativen Abstand oder eine relative Geschwindigkeit des Objekts zu der Einrichtung handeln.

Es ergibt sich im Vergleich zur direkten Abtastung eine feinere Ortsauflösung von Rückstreukurven und somit weniger Aufwand bei einer Verarbeitung der Signale. Die Betriebsparameter der Quelle werden vorzugsweise entfernungsabhängig variiert.

Die vorgesehene Ausbildung der Einrichtung hat den Vorteil, dass ein Bandendeabgleich nur für Komponenten oder Bauteile erfolgen muss, die sich nicht in einer Kalibrationskette der Schaltungsanordnung befinden. Der Bandendeabgleich kann entfallen, wenn eine Streuung der Laufzeiten in den nicht erfassten Komponenten so gering ist, dass diese unterhalb der geforderten Messgenauigkeit ist. Die Erfindung erfordert somit lediglich einen minimalen signaltechnischen Eingriff in hochempfindliche Empfangspfade bekannter Applikationsschaltungen, die nunmehr mit der Referenzpulswicklung einfach nachzurüsten sind. Mit der Einrichtung ist außerdem ein Verfahren zur Autokalibration bei direkter Abtastung von Rückstreusignalen durchführbar. Die Quelle kann mit der Schaltungsanordnung verbunden sein, die Betriebsparameter der Quelle sind bspw. durch die Schaltungsanordnung einstellbar. Durch Mehrfachnutzung des HF-Übertragers, man benötigt nur eine weitere Primärwicklung und einen zusätzlichen Schalter, ist nur ein geringer Bauteileaufwand erforderlich. Ein zusätzlicher Schalter in einem Sendepfad ist nicht erforderlich. Eine Breite eines Referenzpeaks, der eine Anzahl von Abtastpunkten bestimmt, ist zur Anpassung an einen im Normalbetrieb eintreffenden Lichtpuls einstellbar.

Herkömmliche Applikationsschaltungen dienen einer möglichst störungsfreien Einkopplung von Analogsignalen in A/D-Wandler über HF-Transformatoren. Mit der Erfindung wird nunmehr der angepasste HF-Übertrager zur Einspeisung des Referenzpulses zur Bestimmung von Laufzeiten in Applikationsschaltungen bereitgestellt. Mit der Erfindung ist eine Autokalibration bei direkter Abtastung von Rückstreusignalen zur Laufzeitmessung in Sensoren zur Umfelderfassung mittels Pulsbetrieb, Ultraschall, Lidar oder Radar möglich. Die Generierung oder eine Einspeisung des Referenzsignals beeinflusst eine Funktion herkömmlicher Applikationsschaltungen nur geringfügig.

Thermische Drifts von Laufzeiten in Komponenten der Einrichtung können mittels Temperatursensoren kompensiert werden. Bei einem Lidar-System haben Komponenten, z.B. Laserdiodentreiber, signifikant temperaturabhängige Laufzeiten. Komponenten der Einrichtung, die bezüglich einer angestrebten Messgenauigkeit als konstant anzusehende Laufzeiten haben, sind z. B. Laserdioden, Empfangsdioden und Verstärker als mögliche Komponenten der Quelle.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnung

Die Erfindung ist anhand eines Ausführungsbeispiels in der Zeichnung schematisch dargestellt und wird im folgenden unter Bezugnahme auf die Zeichnung ausführlich beschrieben.
Figur 1 zeigt zwei Diagramme zu einem Prinzip eines Boxcar-Verfahrens.
Figur 2 zeigt ein Diagramm eines ersten Beispiels zu einer aussendbaren Lichtleistung über einem Puls-Pausen-Verhältnis für eine Laserdiode.
Figur 3 zeigt ein Diagramm eines zweiten Beispiels zu einer aussendbaren Lichtleistung über einem Puls-Pausen-Verhältnis für eine Laserdiode.
Figur 4 zeigt ein Diagramm zu einem Zusammenhang von Betriebsparametern.
Figur 5 zeigt ein Beispiel zu einer entfernungsabhängigen Adaption von Betriebsparametern.
Figur 6 zeigt in schematischer Darstellung eine bevorzugte Ausführung einer Schaltungsanordnung einer Einrichtung.
Figur 7 zeigt ein Ablaufdiagramm zu einer Kalibration.

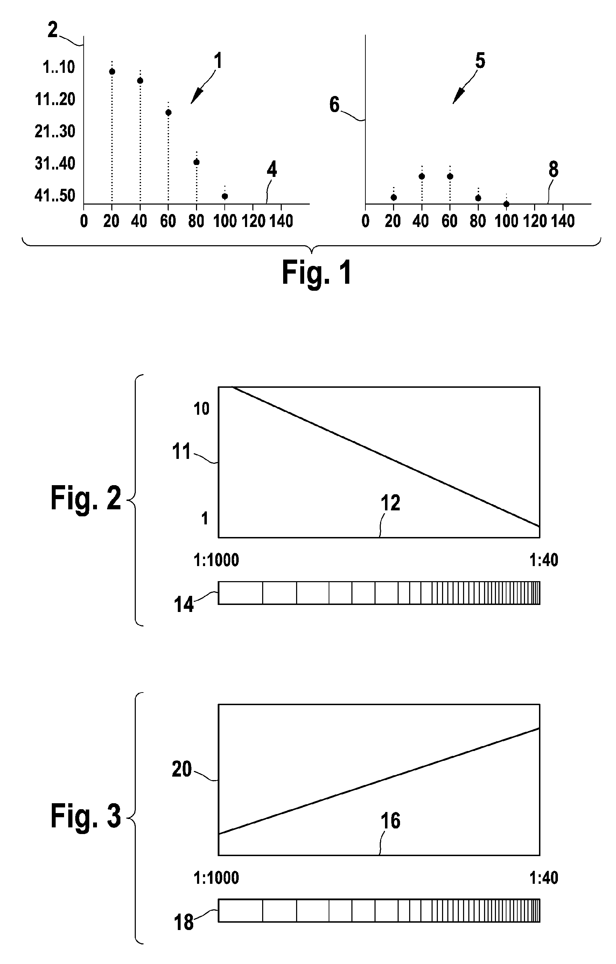

Ein Prinzip des Boxcar-Verfahrens ist anhand von zwei Diagrammen in Figur 1 gezeigt. In dem links abgebildeten Diagramm 1 ist eine Anzahl von Messpulsen entlang einer Ordinate 2 über einer Anzahl von Entfernungszellen entlang einer Abszisse 4 aufgetragen. Gemäß diesem Diagramm 1 erfolgt eine Signalmittelung über jeweils zehn Pulse. Anhand dieser Signalmittelung folgt ein Ergebnis gemäß dem rechts abgebildeten Diagramm 5, bei dem eine Intensität entlang einer Ordinate 6 über der Zeit entlang einer Abszisse 8 abgebildet ist. Dieses hier vorliegende Ergebnis ergibt sich nach fünfzig gemessenen Pulsen. Bei dem Boxcar-Verfahren wird zur Messung eine Zeitdehnung vorgenommen. Eine Abtastung eines sich wiederholenden Signals erfolgt somit zu unterschiedlichen Zeitpunkten, was durch eine Zeitverzögerungsschaltung realisierbar ist. Pro einge-stellter Zeitverzögerung wird eine bestimmte Anzahl von Pulsen ausgewertet, dies erfolgt hier durch Summierung über jeweils zehn Pulse.

Beim Boxcar-Verfahren ist eine die Ortsauflösung durch die Größe einer Zeitverzögerung bzw. eines Delayschritts gegeben, bei z.B. 1000 Delaystufen auf 30 m Entfernung entspricht dies einem Delayschritt von 200 ps.

Da beim Boxcar-Verfahren einzelne Datenpunkte relativ langsam eintreffen, bspw. ein Datenpunkt pro Puls, ist die zu übertragende bzw. zu verrechnende Datenmenge vergleichsweise gering. Die Entfernungsauflösung ist somit wesentlich besser als beim Verfahren der direkten Abtastung der Rückstreukurve, bei dem die Orstauflösung durch eine Abtastrate eines A/D-Wandlers gegeben ist. Bei gängigen Delaybausteinen, z.B. "CC8502" der Robert Bosch GmbH, ist außerdem eine Funktion zur Kalibrierung von Entfernungsstufen vorgesehen, was einen Abgleich eines Sensorsystems am Bandende wesentlich erleichtert.

Ein Vorteil des Verfahrens der direkten Abtastung der Rückstreukurve ist, dass alle Punkte der Rückstreukurve nach einem Puls, dieser entspricht einer Zeitdauer, die das Licht zum Durchlaufen einer Maximalentfernung, z.B. 500ns bei einer max. Entfernung von 75 m zurücklegt, vorliegt. Diese Punkte können nach Übertragung an eine Auswerteelektronik weiterverarbeitet werden.

Für langreichweitige Lidar-Systeme werden Laserdioden mit hohen Pulsleistungen eingesetzt, die mit einem Puls-Pause-Verhältnis (Dutycycle) von 1:40 bis 1:1000 betrieben werden. Durch Reduktion einer Pulsleistung ist es möglich, Laserdioden mit erhöhtem Dutycycle zu betreiben. In dem Diagramm aus Figur 2 ist hierzu beispielhaft die Pulsleistung entlang der Ordinate 11 über dem Dutycycle entlang der Abszisse 12 aufgetragen. Ein Balken 14 zeigt eine Anzahl von Delaystufen.

Bei dem vorliegenden Verfahren wird bezüglich Auswertung, Auflösung und Kalibration das günstigere Boxcar-Verfahren über einen größeren Entfernungsbereich auch z.B. bei Quellen oder Lichtquellen, die mit variablen Dutycyclen betrieben werden können, genutzt.

In dem Diagramm aus Figur 3 ist diesbezüglich dargestellt, dass dazu bei kleinem Puls-Pausen-Verhältnis, das entlang einer Abszisse 16 aufgetragen ist, eine Anzahl der Delaystufen (Balken 18) erniedrigt werden kann, um eine Gesamtmesszeit für eine komplette Rückstreukurve minimal zu halten. Dadurch wird ein Auflösungsvermögen reduziert, was einem Grobscan mit hoher Pulsleistung entspricht. Entlang der Ordinate 20 ist hier eine Anzahl von Delaystufen (Ortsauflösung) bzw. eine Anzahl von Abtastpunkten pro Delaystufe aufgetragen. Bei hohen Pulsleistungen kann die Anzahl der Pulse, über die gemittelt wird, reduziert werden, um die Messzeit für die Rückstreukurve zu verkürzen. Durch geeignete Wahl der Parameter Dutycycle, Anzahl der Entfernungszellen und Anzahl der Mittelungen pro Entfernungszelle kann für jeden Betriebszustand eine optimale Leistungsfähigkeit erreicht werden.

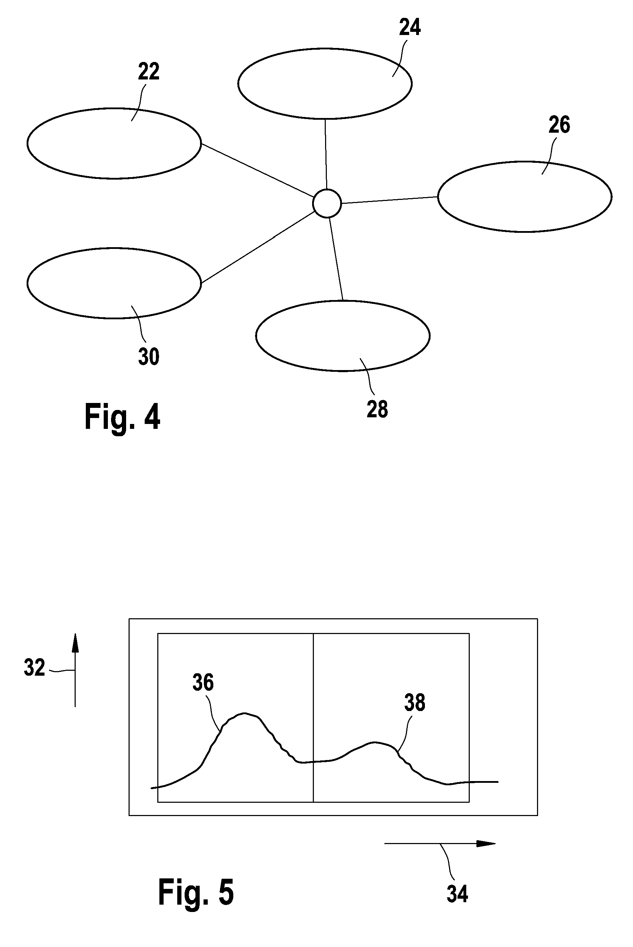

Ein Spannungsfeld der Betriebsparameter Dutycycle 22, Auflösungsvermögen 24, Mittelung pro Entfernungszelle 26, Messzeit einer Rückstreukurve 28 sowie der Pulsleistung 30 ist in dem Diagramm aus Figur 4 dargestellt. Bei dem vorliegenden Verfahren erfolgt, um prinzipiell die Anwesenheit von Objekten zu detektieren, mittels der Quelle zunächst ein Grobscan mit maximaler Pulsleistung und minimalem Dutycycle 22, grober Entfernungsauflösung 24 und minimaler Anzahl von Mittelungen pro Entfernungszelle 26. Kommt es zur Detektion des Objekts, werden die Betriebsparameter, vorzugsweise entfernungsabhängig, eingestellt. Bei einem auf den Grobscan folgenden Feinscan erfolgt eine Reduktion der Lichtleistung und somit eine Erhöhung des Dutycycles 22, eine Erhöhung der Entfernungsauflösung 24 und ggf. eine Erhöhung der Anzahl von Mittelungen pro Entfernungszelle 26, so dass eine Funktionsweise oder Performance der Einrichtung optimal ist, dazu gehört eine akzeptable Messzeit für die Rückstreukurve, Augensicherheit, Lebensdauer der Laserdiode und/oder Reichweite.

Zusätzlich kann auch eine entfernungsabhängige Adaption der Betriebsparameter innerhalb eines Messzyklus der Rückstreukurve erfolgen, um mehrere Ziele in einem Detektionsbereich oder Umfeld optimal zu vermessen. Hierzu ist in dem Diagramm aus Figur 5 eine Intensität 32 einer Rückstreuung über der Entfernung aufgetragen. Das Diagramm zeigt links eine Rückstreukurve für einen ersten Satz 36 und rechts eine Rückstreukurve für einen zweiten Satz 38 für entfernungsabhängige Betriebsparameter.

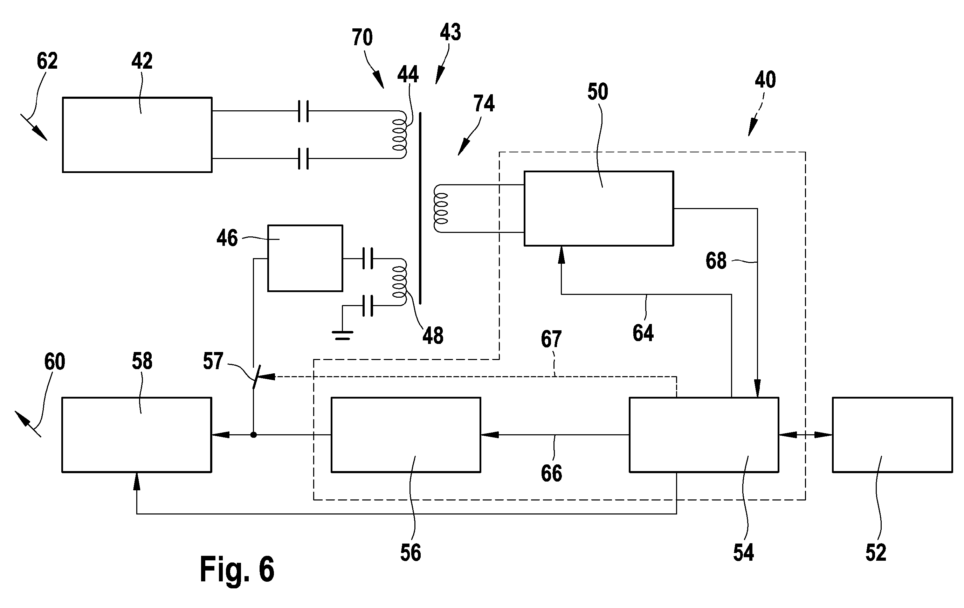

In Figur 6 ist ein Blockschaltbild einer Schaltungsanordnung 40 eines Ausführungsbeispiels der erfindungsgemäßen Einrichtung gezeigt. Diese Schaltungsanordnung 40 umfasst eine Empfangsdiode 42 mit Verstärker, einen HF-Übertrager 43, eine Signalwicklung 44, einen Pulsformer 46, eine Referenzwicklung 48, einen Analog-Digital(A/D)-Wandler 50, eine Auswerteeinheit 52, die hier keine Laufzeiteffekte erzeugt, eine Steuereinheit 54, einen Sendediodentreiber 56, einen Schalter 57 sowie als Quelle eine Sendediode 58 mit Intensitätssteuerung. Es ist vorgesehen, dass die Sendediode 58 mit der Intensitätssteuerung zum Aussenden von Lichtpulsen 60 und die Empfangsdiode 42 mit Verstärker zum Empfang von Lichtpulsen 62 vorgesehen ist. Betriebsparameter der Einrichtung und insbesondere der die Sendediode 58 umfassenden Quelle sind je nach dem, ob ein Grobscan oder Feinscan durchzuführen ist, einstellbar.

Im Normalbetrieb der Einrichtung wird bei Messung der Lichtlaufzeit von der Steuereinheit 54 ein Wandlertakt 64 an den A/D Wandler 50 geschickt. Zu einer definierten Taktflanke des Wandlertakts 64 wird von der Steuereinheit 54 ein Puls 66 generiert, der nach einer bestimmten Laufzeit durch die Elektronik der Messeinrichtung als Lichtpuls 60 von der Sendediode 58 abgestrahlt wird. Der Schalter 57 wird durch einen von der Steuereinheit 54 erzeugten Freigabepuls 67 umgeschaltet. Der ausgesendete Lichtpuls 60 wird von einem Objekt als Lichtpuls 62 reflektiert. Dieser Lichtpuls 62 erreicht die Empfangsdiode 42 und wird in einer Empfängerschaltung in einen elektrischen Puls umgewandelt, der im A/D-Wandler 50 in ein digitales Datenwort 68 umgewandelt wird, das schließlich wieder zur Steuereinheit 54 gelangt. Die Rückstreukurve setzt sich aus den Datenwörtern 68 für eine bestimmte Anzahl von Wandlertakten zusammen. Diese Rückstreukurve wird in einer Signalverarbeitungseinheit weiterverarbeitet, in der deren Peaklage bestimmt wird.

Zur möglichst störungsarmen Erfassung der hier analogen Signale erfolgt vorteilhafterweise eine differentielle Messung der Signale unter Gleichtaktunterdrückung. Zur Auskopplung von Gleichanteilen werden Koppelkondensatoren eingesetzt.

Auf einer Primärseite 70 des HF-Übertragers 43 ist neben der Signalwicklung 44 für das Signal zusätzlich die Referenzpulswicklung für den von der Einrichtung generierten Referenzpuls aufgebracht. Ein Servicezyklus zur Vermessung der Lage des Referenzpulses läuft im wesentlichen wie die Bestimmung der Lage des Lichtpulses 62 ab. Der Unterschied besteht darin, dass der elektrische Puls 66 zur Auslösung des Lichtpulses 60 über einen Schalter auf der Primärseite 70 des HF-Übertragers 43 eingespeist wird. Die Aussendung des Lichtpulses 60 wird unterdrückt, wobei eine Intensität gleich null ist, so dass kein Signal auf der Signalwicklung 44 ankommt, das den Referenzpuls stören könnte. Der Referenzpuls wird wie zuvor der Lichtpuls 62 auf eine Sekundärseite 74 des HF-Übertragers 43 übertragen und in gleicher Weise zur Bestimmung der Peaklage weiterverarbeitet. Gegebenenfalls ist noch eine Pulsformereinheit zur Bereitstellung eines konstanten Laufzeitverhaltens einzufügen, um das im Normalbetrieb einkommende Lichtsignal 62, auf das eine Basis-Signalverarbeitung optimiert ist, möglichst genau nachbilden zu können. Von den gestrichelt umrandeten Komponenten 50, 54, 56 ist aufgrund der Ausgestaltung der Schaltungsanordnung 40 nunmehr ein Laufzeitverhalten bestimmbar.

Durch die hier vorgesehene Einkopplung wird eine Störung des Normalbetriebs minimiert. Es ist zudem kein zusätzlicher Schalter im Sendepfad nötig, wenn, wie im Ausführungsbeispiel beschrieben, die Intensität der Sendediode 58 auf Null gesetzt wird. Im Vergleich zur ebenfalls möglichen kapazitiven Einkopplung des Signals bleiben die Vorteile der Einkopplung über den HF-Übertrager 43 bei Gleichtaktunterdrückung und galvanischer Trennung erhalten.

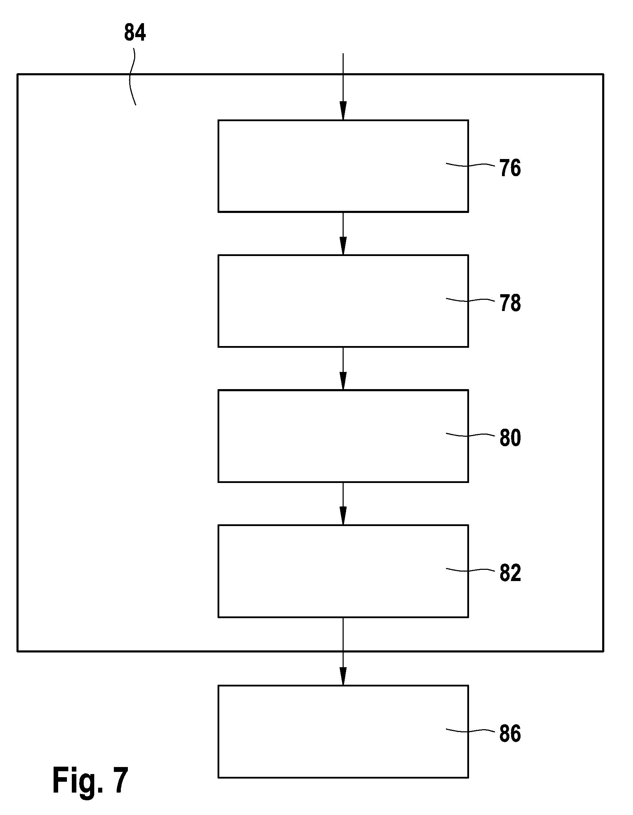

Das in Figur 7 gezeigte Diagramm zeigt einen Ablauf einer Kalibration der erfindungsgemäßen Einrichtung. In vier Schritten 76, 78, 80, 82 wird dabei ein Servicezyklus 84 zur Bestimmung der Laufzeiten der in Figur 6 vorgestellten Komponenten durchgeführt. Hierzu erfolgt in dem ersten Schritt 76 eine Minimierung einer Abstrahlintensität der Sendediode 58 (Figur 6). In dem zweiten Schritt 78 ein Schließen des Schalters 72 (Figur 6) für den Referenzpuls, in dem dritten Schritt 80 ein Aussenden des Lichtpulses 60 (Figur 6) mit einstellbarer Länge und in dem vierten Schritt 82 eine Ermittlung der Lage des Referenzpulses zur Ermittlung der Laufzeiten in den Komponenten 50, 54, 56 (Figur 6) der Messeinrichtung. In einem letzten Schritt 86 erfolgt eine Substraktion der über die Auswertung des Referenzpulses ermittelten Laufzeit von der Laufzeit des Lichts.

## Patentansprüche

1. Einrichtung zur Umfelderfassung, die folgendes aufweist:
• eine Quelle, die gepulste Signale aussendet,
• einen Sensor zur Abtastung von gepulsten Signalen, die von einem Objekt rückgestreut werden,
• eine Schaltungsanordnung (40), die in einem Eingangspfad auf einer Primärseite (70) eines HF-Übertrager (43) eine Referenzpulswicklung (48) zur Generierung eines Referenzpulses aufweist, und
• mindestens eine weitere Komponente (50, 54, 56) der Schaltungsanordnung (40), wobei der Referenzpuls zur Bestimmung einer Laufzeit in der mindestens einen weiteren Komponente (50, 54, 56) ausgebildet ist.

2. Einrichtung nach Anspruch 1, die zur Bestimmung eines Abstands zu dem Objekt ausgebildet ist.

3. Einrichtung nach Anspruch 1 oder 2, **dadurch gekennzeichnet, dass** die Einrichtung derart ausgebildet ist, dass bei einer Grobabtastung eine Anwesenheit eines Objekts detektiert wird, und dass zur Bestimmung einer mit dem detektierten Objekt zusammenhängenden Größe Betriebsparameter der Quelle auf eine Feinabtastung eingestellt werden.

4. Einrichtung nach einem der Ansprüche 1 bis 3, **dadurch gekennzeichnet, dass** die Einrichtung derart ausgebildet ist, dass ein variables Puls-Pausen-Verhältnis (22) für die gepulsten Signale vorgesehen ist.

5. Einrichtung nach einem der Ansprüche 1 bis 4, **dadurch gekennzeichnet, dass** die Einrichtung derart ausgebildet ist, dass bei der Grobabtastung ein minimales Puls-Pausen-Verhältnis (22) und eine maximale Pulsleistung (30) eingestellt wird.

6. Einrichtung nach einem der Ansprüche 1 bis 5, **dadurch gekennzeichnet, dass** die Einrichtung derart ausgebildet ist, dass die Betriebsparameter der Quelle zur Durchführung der Feinabtastung in Abhängigkeit einer Entfernung des Objekts eingestellt werden.

## Claims

1. Device for sensing the surroundings, which has the following:
• a source which emits pulsed signals,
• a sensor for sampling pulsed signals which are back-scattered by an object,
• a circuit arrangement (40) which has a reference pulse winding (48) for generating a reference pulse in an input path on a primary side (70) of an HF transformer (43), and
• at least one further component (50, 54, 56) of the circuit arrangement (40), the reference pulse being designed to determine a propagation time in the at least one further component (50, 54, 56).

2. Device according to Claim 1, which is designed to determine a distance to the object.

3. Device according to Claim 1 or 2, **characterized in that** the device is designed in such a manner that, during coarse sampling, a presence of an object is detected, and **in that** operating parameters of the source are set to fine sampling in order to determine a variable associated with the detected object.

4. Device according to one of Claims 1 to 3, **characterized in that** the device is designed in such a manner that a variable pulse-pause ratio (22) is provided for the pulsed signals.

5. Device according to one of Claims 1 to 4, **characterized in that** the device is designed in such a manner that, during coarse sampling, a minimum pulse-pause ratio (22) and a maximum pulse power (30) are set.

6. Device according to one of Claims 1 to 5, **characterized in that** the device is designed in such a manner that the operating parameters of the source are set on the basis of a distance of the object in order to carry out the fine sampling.

## Revendications

1. Dispositif de balayage de l'environnement, comprenant les éléments suivantes :
* une source qui émet des signaux pulsés,
* un capteur destiné à palper les signaux pulsés qui sont rétrodiffusés par un objet,
* un arrangement de circuit (40) qui, dans un trajet d'entrée sur un côté primaire (70) d'un transmetteur HF (43), possède un enroulement d'impulsion de référence (48) destiné à générer une impulsion de référence, et
* au moins un composant supplémentaire (50, 54, 56) de l'arrangement de circuit (40), l'impulsion de référence étant conçue pour déterminer un temps de propagation dans l'au moins un composant supplémentaire (50, 54, 56).

2. Dispositif selon la revendication 1, lequel est disposé pour déterminer un écart par rapport à un objet.

3. Dispositif selon la revendication 1 ou 2, **caractérisé en ce que** le dispositif est configuré de telle sorte que la présence d'un objet est détectée lors d'un palpage grossier et **en ce que** les paramètres de fonctionnement de la source sont réglés sur un palpage fin en vue de la détermination d'une grandeur associée à l'objet détecté.

4. Dispositif selon l'une des revendications 1 à 3, **caractérisé en ce que** le dispositif est configuré de telle sorte qu'il est prévu un rapport impulsion/pause (22) variable pour les signaux pulsés.

5. Dispositif selon l'une des revendications 1 à 4, **caractérisé en ce que** le dispositif est configuré de telle sorte que lors du palpage grossier, un rapport impulsion/pause (22) minimal et une puissance d'impulsion (30) maximale sont réglés.

6. Dispositif selon l'une des revendications 1 à 5, **caractérisé en ce que** le dispositif est configuré de telle sorte que les paramètres de fonctionnement de la source en vue d'effectuer le palpage fin sont réglés en fonction d'une distance de l'objet.
